## Europäisches Patentamt
## European Patent Office
## Office européen des brevets

(11) Veröffentlichungsnummer: **0 121 199**
**B1**

(12) **EUROPÄISCHE PATENTSCHRIFT**

(45) Veröffentlichungstag der Patentschrift:
**18.10.89**

(51) Int. Cl.⁴: **H 01 S 3/03**, C 03 C 27/00

(21) Anmeldenummer: **84103255.0**

(22) Anmeldetag: **23.03.84**

(54) Gaslaserröhre.

(30) Priorität: **30.03.83 DE 3311726**

(43) Veröffentlichungstag der Anmeldung:
**10.10.84 Patentblatt 84/41**

(45) Bekanntmachung des Hinweises auf die Patenterteilung:
**18.10.89 Patentblatt 89/42**

(84) Benannte Vertragsstaaten:
**BE CH DE FR GB IT LI NL SE**

(56) Entgegenhaltungen:
EP-A- 0 119 408
DE-A- 2 604 740
US-A- 3 784 927
US-A- 4 063 803
US-A- 4 064 466

SOVIET JOURNAL OF OPTICAL TECHNOLOGY, Band 41, Nr. 7, Juli 1974, Seiten 397-399, American Institute of Physics, New York, US; Yu.G. ZAKHARENKO et al.: "On reducing the mechanical stresses in windows mounted at the Brewster angle"

(73) Patentinhaber: **Siemens Aktiengesellschaft, Wittelsbacherplatz 2, D-8000 München 2 (DE)**

(72) Erfinder: **Golser, Hans, Kurt-Eisner-Strasse 22, D-8000 München 83 (DE)**

## Beschreibung

Die Erfindung betrifft eine Laserröhre gemäß dem Oberbegriff des Anspruchs 1. Eine solche Laserausführung ist beispielsweise aus der US-PS 4 063 803 bekannt.

Bei den meisten Gaslasern verschließt man die Vakuumhülle mit optischen Elementen, die thermisch nicht an den Hüllenkörper angepaßt sind. Dieser Umstand wäre unkritisch, wenn man zum Fixieren des Abschlußelements ein Epoxidharz, das schon bei Temperaturen unter 200 °C aushärtet und relativ elastisch bleibt, verwenden würde. Organische Kleber spielen aber schon seit Jahren keine Rolle mehr, weil sie nicht völlig undurchlässig sind, keine hohen Ausheiztemperaturen zulassen und zudem die Gasfüllung mit eigenen Bestandteilen kontaminieren. Erfahrungsgemäß kommen hochwertige Abdichtungen nur dann zustande, wenn man mit Löt-, Schmelz- oder Schweißverbindungen arbeitet und die Fehlanpassung zwischen Hülle und Fenster durch eine geeignete Übergangskonstruktion abfängt.

In der eingangs zitierten Literaturstelle wird ein Kapillarenende mit folgendem Aufbau beschrieben: An den Hauptabschnitt der Kapillare ist ein Kovarröhrchen angeglast, das seinerseits mit einem dünnwandigen Kupferröhrchen verschweißt ist. Das freie Ende des Kupferteils ist aufgetrichtert und umschließt ein paßgenau gearbeitetes, eingelötetes Brewster-Fenster aus Quarz. Kritisch ist diesem Konzept die Lotverbindung zwischen dem Fenster und seiner Fassung: Sie ist auch bei Verwendung hochduktiler Materialien wie Kupfer noch starken thermischen Spannungen ausgesetzt und kann reißen, wenn man die Paßflächen nicht maßgenau fertigt und den Lötprozeß sorgfältig durchführt. Überdies besteht die Gefahr, daß das Fenster durch Verformungen des nachgiebigen Kupferröhrchens dejustiert wird.

Deshalb entscheidet man sich heutzutage gewöhnlich für eine abgestufte Verbindung mit mehreren Zwischenstücken, die ebenso formfest sind wie die Röhre und das Fenster und die thermischen Ausdehnungskoeffizienten beider Teile in zulässigen Sprüngen ineinander überführen. Diese Methode liefert einwandfreie Resultate, ist aber umständlich und teuer. So enthält etwa ein im Handel befindlicher 25mW-HeNe-Laser, bei dem eine Hartglas-Kapillare mit einem Quarzfenster kombiniert ist, mindestens vier verschiedene Zwischengläser (Modell «107» von Spectra-Physics).

Der Erfindung liegt die Aufgabe zugrunde, einen Gaslaser der eingangs genannten Art mit einer Übergangseinheit zu versehen, die sich einfach herstellen läßt, einwandfrei abdichtet und den optischen Abschluß zuverlässig in Position hält. Diese Aufgabe wird erfindungsgemäß durch eine Laserröhre mit den Merkmalen des Patentanspruchs 1 gelöst.

Der Lösungsvorschlag geht von der Tatsache aus, daß sich Metallringe auch dann, wenn ihre thermischen Ausdehnungskoeffizienten $x$ erheblich voneinander differieren, ohne weiteres vakuumdicht miteinander verbinden lassen. So kann man ohne weiteres $x$-Sprünge von mehr als $100 \times 10^{-7} °K^{-1}$ zulassen. Das bedeutet, daß sich praktisch alle Werkstoffe, die für die Hülle oder die optischen Abschlußelemente in Frage kommen, durch das erfindungsgemäß vorgesehene Übergangselement überbrücken lassen. Die beiden Ringe sind dabei derart auf Anschlag ineinandergeschoben, daß sie beim Zusammenfügen automatisch zueinander zentriert werden und ohne besondere Abstützvorkehrungen miteinander verschweißt oder verlötet werden können. Die Verbindung selbst läßt sich rationell, etwa durch eine Elektronenstrahltechnik, realisieren und ist im übrigen völlig unproblematisch, weil das Stecksystem geeignete, mechanisch wie thermisch wenig belastete Stoßflächen ermöglicht. Dadurch, daß die Verbindungsnaht innen liegt, hat das Übergangselement keinen zum Hülleninneren hin offenen Spalt. Dieser zunächst nebensächlich erscheinende Umstand trägt nicht unwesentlich zu einer langen Lebensdauer bei, denn in haarfeinen Hohlräumen sammeln sich häufig Rückstände, die sich mit üblichen Reinigungsverfahren kaum entfernen lassen und dann beim Betrieb der Röhre die Gasfüllung allmählich vergiften.

Es ist an sich aus der US-PS 4 352 185 bereits bekannt, zwischen eine Glashülle und einen aus Glas bestehenden Spiegelkörper zwei Metallteile mit voneinander abweichenden, ihren jeweiligen Glaspartnern dagegen angepaßten $x$-Werten einzusetzen. Bei diesem vorbekannten Laser ist allerdings eines der Metallteile kappen- statt ringförmig ausgebildet und die Metall-Metall-Verbindung anders ausgeführt.

Vorteilhafte Ausgestaltungen und Weiterbildungen der Erfindung sind Gegenstand weiterer Ansprüche.

Der Lösungsvorschlag soll nun anhand eines bevorzugten, in der beigefügten Zeichnung dargestellten Ausführungsbeispiels näher erläutert werden. In den Figuren sind einander entsprechende Teile mit gleichen Bezugsziffern bezeichnet. Es zeigen

Fig. 1 eine Laserröhre in einem Seitenschnitt und

Fig. 2 von der Röhre der Fig. 1 einen der beiden Endabschnitte.

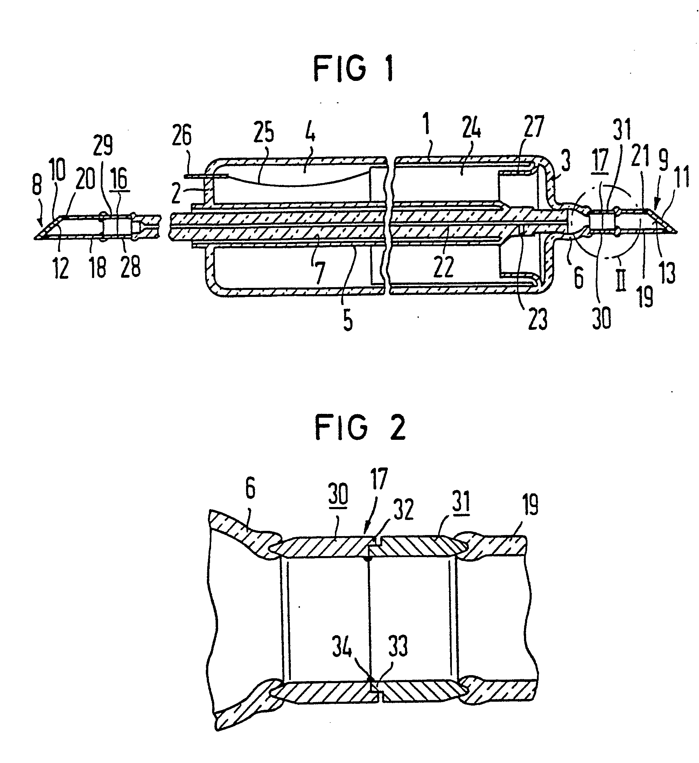

Die dargestellte Röhre gehört zu einem 25mW-HeNe-Gaslaser. Sie enthält einen zylindrischen Mantel 1, der stirnseitig jeweils durch eine Endplatte 2, 3 abgeschlossen wird; dieser Hohlkörper definiert einen Raum 4. Die Platte 2 wird von einem Rohr (Fixierrohr 5) durchsetzt, das weit in den Raum 4 hineinragt. Der Endplatte 3 ist ein Hüllenabschnitt 6 in Form eines nach außen weisenden, rohrförmigen Stutzens mit kalibriertem Innendurchmesser angeformt. Eine Kapillare 7 ist berührungsfrei durch das Fixierrohr 5 in das Innere des Hohlkörpers eingeschoben und ruht mit ihrem einen Ende paßgenau im Stutzen 6. Alle Teile sind, wie der Fig. 1 zu entnehmen, zu einem einteiligen, rotationssymmetrischen Körper zusammengesetzt.

Die Kapillare 7 und der Stutzen 6 werden nach außen jeweils durch ein Brewster-Fenster 8, 9 verschlossen. Beide Fenster bestehen jeweils aus einer Trägerplatte 10, 11, die innenseitig mit je einer Schicht 12, 13 überzogen ist. Zwischen dem Fenster 8 und der Kapillare 7 sowie zwischen dem Fenster 9 und dem Stutzen 6 befindet sich jeweils ein Übergangselement 16, 17 sowie ein Röhrchen, welches als Endstück 18, 19 dient. Die Röhrchen sind mit einem Winkel α von 56°40' angeschnitten und über ein Glaslot 20, 21 mit den Fenstern hermetisch dicht verbunden.

Die Kapillare hat eine Bohrung 22, die über eine Öffnung 23 mit dem Raum 4 kommuniziert. In diesem Raum befindet sich eine hohle Kaltkathode 24, die über eine Zuleitung 25 mit einer in die Endplatte 2 eingesetzten Durchführung 26 elektrisch verbunden ist. Zwischen der Öffnung 23 und der Kaltkathode 24 befindet sich eine vom Mantel 1 ausgehende Schutzglocke 27, die dafür sorgt, daß die Kathode im Betrieb der Röhre möglichst rotationssymmetrisch emittiert und die Kathodenkante abgeschirmt wird.

Der aus den Teilen 1 bis 7 gebildete Körper besteht aus einem Hartglas, das von der Firma Schott unter der Bezeichnung «8250» angeboten wird und einen thermischen Ausdehnungskoeffizienten $x_1$ von $49 \times 10^{-7\circ}K^{-1}$ hat. Dieser Glastyp ist mechanisch und thermisch hochbelastbar. Die Trägerplatten 10, 11 und die Röhrchen 18, 19 bestehen aus dem Weichglas «GW» von Schott, das einen $x_2$-Wert von $95 \times 10^{-7\circ}K^{-1}$ hat und sich besonders bequem verlöten läßt. Das Glaslot ist ein von Schott unter der Bezeichnung «GO17/292» beziehbares Weichlot, das zu der Glastype «GW» paßt und die zu verbindenden Oberflächen einwandfrei benetzt. Die Schichten 12 und 13 bestehen aus einem aufgesputterten Quarz. Die Kathode ist ein Zirkonzylinder. Der vakuumdicht verschlossene Raum enthält eine HeNe-Mischung von 2,6 mbar, und die Gasentladung wird mit einer Spannung von ca. 12 kV gezündet und mit 4 kV aufrechterhalten.

Die Übergangselemente 16, 17, die zugleich als Anode dienen, sind gleich geformt und jeweils aus zwei als Ringe ausgebildeten Abschnitten 28, 29 bzw. 30, 31 zusammengesetzt. Die Ringe 28, 30 bestehen aus $Ni_{28}Co_{18}Fe_{54}$ ($x_3 = 50 \times 10^{-7\circ}K^{-1}$) und die Ringe 29, 31 aus $Ni_{51}Cr_1Fe_{48}$ ($x_4 = 95 \times 10^{-7\circ}K^{-1}$), also aus Legierungen, die sich thermisch wie die Gläser «8250» bzw. «GW» verhalten. Alle Ringe sind an ihre Glaspartner — mit leicht angeschnittenen Enden — geglast und miteinander über einen vakuumdicht verschweißten Steckkontakt verbunden.

Fig. 2 zeigt diese Verbindung im Detail: Bei den Ringen 28, 30 springt die Innenwandung derart zurück, daß ein Außensteg 32 entsteht, und die Ringe 29, 31 laufen — durch einen sprunghaft zurückspringenden Außendurchmesser — in einen Innensteg 33 aus. Der Außensteg ist etwas kürzer als der Innensteg, damit die ineinandergesetzten Ringe an der Stirnseite des Innenstegs anschlagen. An der Stelle 34 sind beide Teile elektronenstrahlverschweißt. Das gesamte Element hat etwa folgende Abmessungen: Gesamtlänge 10 mm, Innendurchmesser 6 mm und Außendurchmesser 8 mm. Der Innensteg ist etwa 0,5 mm lang und 0,5 mm dick. Dort, wo beide Ringe übereinandergeschoben sind, haben sie Maßtoleranzen von ± 0,01 mm.

Die Erfindung beschränkt sich nicht nur auf die dargestellte Ausführungsform. So hat man etwa bei der Wahl der Verbindungstechniken noch einen gewissen Spielraum: Beispielsweise könnten die Metallteile auch ein- oder beidseitig verlötet oder mittels einer Ar-Arc-Schweißung miteinander verbunden werden. Davon abgesehen kommen für die Hülle und die endständigen Röhrchen auch andere Materialien wie Quarzglas oder eine (Oxid-)Keramik in Frage; für alle diese Werkstoffe gibt es thermisch angepaßte Metalle (vgl. hierzu beispielsweise H. Steyskal «Arbeitsverfahren und Stoffkunde der Hochvakuumtechnik», Physikverlag, 1955, insbesondere Kapitel 3, oder H. Katz «Technologische Grundprozesse der Vakuumelektronik», Springer-Verlag, 1974, insbesondere Abschnitt 2). Im übrigen ist es auch durchaus möglich, die Vakuumhülle statt mit einem (Brewster-)Fenster mit einem Spiegel abzuschließen und/oder das Übergangselement direkt als Fassung für das Verschlußelement zu verwenden.

Bezugszeichenliste

| Nr. | Begriff |
| --- | --- |
| 1 | Mantel |
| 2, 3 | Endplatte |
| 4 | Raum |
| 5 | Fixierrohr |
| 6 | Hüllenabschnitt |
| 7 | Kapillare |
| 8, 9 | Brewsterfenster |
| 10, 11 | Trägerplatte |
| 12, 13 | Schicht |
| 16, 17 | Übergangselement |
| 18, 19 | Endstück |
| 20, 21 | Glaslot |
| 22 | Bohrung |
| 23 | Öffnung |
| 24 | Kaltkathode |
| 25 | Zuleitung |
| 26 | Durchführung |
| 27 | Schutzglocke |
| 28–31 | Abschnitt |
| 32 | Außensteg |
| 33 | Innensteg |
| 34 | Stelle |

**Patentansprüche**

1. Gaslaserröhre mit einer Vakuumhülle, enthaltend

1) einen rohrförmigen Hüllenabschnitt (6) aus einem elektrisch isolierenden Material mit einem thermischen Ausdehnungskoeffizienten $x_1$,

2) ein Endstück (18, 19) aus einem elektrisch isolierenden Material mit einem thermischen Ausdehnungskoeffizienten $x_2$, wobei gilt:

$$\left|\frac{x_1 - x_2}{x_i}\right| \geq 0,2 \ (i = 1,2),$$

3) ein den Hüllenabschnitt (6) mit dem Endstück (18, 19) verbindendes Übergangselement (16, 17), das

a) aus zwei metallischen Abschnitten (28, 29; 30, 31) mit unterschiedlichen thermischen Ausdehnungskoeffizienten $x_3$ bzw. $x_4$ besteht und dessen

b) dem Hüllenabschnitt (6) benachbarter erster Abschnitt (erster Metallring 28, 30) thermisch an den Hüllenabschnitt angepaßt ist, d.h.

$$\left|\frac{x_1 - x_3}{x_m}\right| < 0,2, \text{ mit } m = 1,3,$$

dadurch gekennzeichnet, daß

3) c) der zweite Abschnitt des Übergangselements (zweiter Metallring 29, 31) thermisch an das Endstück (18, 19) angepaßt ist, d.h.

$$\left|\frac{x_2 - x_4}{x_n}\right| < 0,2, \text{ mit } n = 2,4,$$

d) die beiden Abschnitte des Übergangselements (16, 17) durch Metallringe (28, 29; 30, 31) gebildet werden, die mit zueinander komplementär gestuften Stirnflächen ineinandergesteckt sind und

e) auf ihrer Innenwand miteinander verschweißt oder verlötet sind.

2. Gaslaserröhre nach Anspruch 1, dadurch gekennzeichnet, daß das Endstück eine rohrförmige Fassung (18, 19) eines vorzugsweise unter dem Brewsterwinkel geneigten Fensters (8, 9) ist.

3. Gaslaserröhre nach den Ansprüchen 1 oder 2, dadurch gekennzeichnet, daß der eine Metallring (29, 31) an seinem dem anderen Metallring (28 bzw. 30) zugewandten Ende einen Steg (Innensteg 33) aufweist, der durch eine sprunghafte Verringerung des Ring-Außendurchmessers entstanden ist, und daß der andere Metallring (28, 30) auf seinem dem einen Metallring (29 bzw. 31) zugewandten Ende ebenfalls einen Steg (Außensteg 32) aufweist, der durch eine sprunghafte Vergrößerung des Ring-Innendurchmessers entstanden ist.

4. Gaslaserröhre nach Anspruch 3, dadurch gekennzeichnet, daß der Innensteg (33) länger ist als der Außensteg (32).

5. Gaslaserröhre nach den Ansprüchen 3 oder 4, dadurch gekennzeichnet, daß der Metallring (29, 31) mit dem größeren $x$-Wert den Innensteg (33) aufweist.

6. Gaslaserröhre nach einem der Ansprüche 1 bis 5, dadurch gekennzeichnet, daß gilt:

$$\left|\frac{x_3 - x_4}{x_k}\right| \geq 4, \text{ insbesondere} \geq 6 \ (k = 3,4).$$

7. Gaslaserröhre nach einem der Ansprüche 1 bis 6, dadurch gekennzeichnet, daß bei dem Übergangselement (16, 17) das Verhältnis von Innendurchmesser zu Gesamtlänge zwischen 0,5 : 1 und 1,5 : 1, das Längenverhältnis beider Metallringe (28, 29; 30, 31) zwischen 0,7 : 1 und 1,3 : 1 und das Verhältnis von Wandstärke zu Gesamtlänge zwischen 0,06 : 1 und 0,15 : 1 liegen.

8. Gaslaserröhre nach einem der Ansprüche 1 bis 7, dadurch gekennzeichnet, daß der Hüllenabschnitt und das Endstück aus verschiedenen Glassorten bestehen, wobei insbesondere gilt: $35 \times 10^{-7\circ}K^{-1} \leq x_1 \leq 55 \times 10^{-7\circ}K^{-1}$ und $80 \times 10^{-7\circ}K^{-1} \leq x_2 \leq 100 \times 10^{-7\circ}K^{-1}$.

9. Gaslaserröhre nach Anspruch 8, dadurch gekennzeichnet, daß $x_1$ und $x_2$ Werte von etwa $50 \times 10^{-7\circ}K^{-1}$ bzw. $95 \times 10^{-7\circ}K^{-1}$ haben und der erste und zweite Metallring (28, 29; 30, 31) aus $Ni_{28}Co_{18}F_{54}$ bzw. $Ni_{51}Cr_1Fe_{48}$ bestehen.

10. Gaslaserröhre nach einem der Ansprüche 1 bis 9, dadurch gekennzeichnet, daß das Übergangselement (16, 17) als Elektrode, vorzugsweise als Anode, dient.

## Claims

1. Gas laser tube comprising a vacuum jacket, containing

1) a tubular jacket section (6) of an electrically insulating material with a coefficient of thermal expansion $x_1$,

2) an end piece (18,19) of an electrically insulating material with a coefficient of thermal expansion $x_2$, it holding that:

$$\left|\frac{x_1 - x_2}{x_i}\right| \geq 0.2 \ (i = 1,2)$$

3) a transition element (16, 17) connecting the jacket section (6) to the end piece (18, 19), which transition element

a) consists of two metallic sections (28, 29; 30, 31) with different coefficients of thermal expansion $x_3$ or $x_4$ and of which

b) the first section (first metal ring 28, 30) adjacent to the jacket section (6) is thermally matched to the jacket section, i.e.

$$\left|\frac{x_1 - x_3}{x_m}\right| < 0.2, \text{ with } m = 1,3$$

characterized in that

3) c) the second section of the transition element (second metal ring 29, 31) is thermally matched to the end piece (18, 19), i.e.

$$\left|\frac{x_2 - x_4}{x_n}\right| < 0.2, \text{ with } n = 2.4,$$

d) the two sections of the transition element (16, 17) are formed by metal rings (28, 29; 30, 31), which are fitted into one another with end faces stepped in a complementary fashion to one another, and

e) are welded or soldered to one another on their internal wall.

2. Gas laser tube according to Claim 1, characterized in that the end piece is a tubular holder (18, 19) of a window (8, 9) preferably inclined at Brewster's angle.

3. Gas laser tube according to Claims 1 or 2, characterized in that one metal ring (29, 31) has at its end facing the other metal ring (28 or 30) a web (internal web 33), which is produced by an abrupt reduction in the external ring diameter, and in that the other metal ring (28, 30) likewise has on its end facing the metal ring (29 or 31) a web (external web 32), which is produced by an abrupt increase in the internal ring diameter.

4. Gas laser tube according to Claim 3, characterized in that the internal web (33) is longer than the external web (32).

5. Gas laser tube according to Claims 3 or 4, characterized in that the metal ring (29, 31) with the larger $x$ value has the internal web (33).

6. Gas laser tube according to one of Claims 1 to 5, characterized in that it holds that:

$$\left| \frac{x_3 - x_4}{x_k} \right| \geq 4, \text{ especially} \quad \geq 6 \ (k = 3.4).$$

7. Gas laser tube according to one of Claims 1 to 6, characterized in that with reference to the transition element (16, 17) the ratio of the internal diameter to the total length lies between 0.5 : 1 and 1.5 : 1, the ratio of the lengths of the two metal rings (28, 29; 30, 31) lies between 0.7 : 1 and 1.3 : 1, and the ratio of the wall thickness to the total length lies between 0.06 : 1 and 0.15 : 1.

8. Gas laser tube according to one of Claims 1 to 7, characterized in that the jacket section and the end piece consist of different glass types, it holding especially that:
$35 \times 10^{-7\circ}K^{-1} \leq x_1 \leq 55 \times 10^{-7\circ}K^{-1}$ and $80 \times 10^{-7\circ}K^{-1} \leq x_2 \leq 100 \times 10^{-7\circ}K^{-1}$.

9. Gas laser tube according to Claim 8, characterized in that $x_1$ and $x_2$ have values of approximately $50 \times 10^{-7\circ}K^{-1}$ or $95 \times 10^{-7\circ}K^{-1}$, and the first and second metal ring (28, 29; 30, 31) consist of $Ni_{28}Co_{18}F_{54}$ or $Ni_{51}Cr_1Fe_{48}$.

10. Gas laser tube according to one of Claims 1 to 9, characterized in that the transition element (16, 17) serves as an electrode, preferably as an anode.

**Revendications**

1. Tube laser à gaz comprenant une enceinte sous vide contenant

1) un tronçon tubulaire d'enceinte (6) en un matériau électriquement isolant et ayant un coefficient de dilatation thermique $x_1$;

2) un embout (18, 19) en un matériau isolant électriquement et ayant un coefficient de dilatation thermique $x_2$, avec

$$\left| \frac{x_1 - x_2}{x_i} \right| \geq 0,2 \ (i = 1,2),$$

3) un tronçon d'enceinte (6) avec l'élément de transition (16, 17) reliant l'embout (18, 19) qui

a) est constitué de deux tronçons métalliques (28, 29; 30, 31) ayant des coefficients de dilatation thermique $x_3$ et $x_4$ différents et dont

b) le premier tronçon (premier anneau métallique 28, 30) voisin du tronçon d'enceinte (6) est adapté thermiquement au tronçon d'enceinte, c'est-à-dire

$$\left| \frac{x_1 - x_3}{x_m} \right| < 0,2, \text{ avec} \quad m = 1,3,$$

caractérisé en ce que

3) c) le second tronçon de l'élément de transition (deuxième anneau métallique 29, 31) est adapté thermiquement à l'embout (18, 19) c'est-à-dire

$$\left| \frac{x_2 - x_4}{x_n} \right| < 0,2, \text{ avec} \quad n = 2.4,$$

d) les deux tronçons de l'élément de transition (16, 17) sont formés par des anneaux métalliques (28, 29; 30, 31) qui sont emboîtés l'un dans l'autre par des surfaces frontales échelonnées l'une par rapport à l'autre de manière complémentaire et

e) sont soudées ou sont brasées l'une à l'autre sur leur paroi intérieure.

2. Tube laser à gaz suivant la revendication 1, caractérisé en ce que l'embout est une monture (18, 19) tubulaire d'une fenêtre (8, 9) inclinée de préférence sous l'angle de Brewster.

3. Tube laser à gaz suivant la revendication 1 ou 2, caractérisé en ce que l'un des anneaux métalliques (29, 31) comporte sur son extrémité tournée vers l'autre anneau métallique (28 et 30) une nervure (nervure intérieure 33) créée par une diminution brusque du diamètre extérieur de l'anneau et en ce que l'autre anneau métallique (28, 30) comporte sur son extrémité tournée vers le premier anneau métallique (29, 31) également une nervure (nervure extérieure 32) créée par une augmentation brusque du diamètre intérieur de l'anneau.

4. Tube laser à gaz suivant la revendication 3, caractérisé en ce que la nervure intérieure (33) est plus longue que la nervure extérieure (32).

5. Tube laser à gaz suivant la revendication 3 ou 4, caractérisé en ce que l'anneau métallique (29, 31) ayant la plus grande valeur de $x$ comporte la nervure intérieure (33).

6. Tube laser à gaz suivant l'une des revendications 1 à 5, caractérisé en ce que:

$$\left| \frac{x_3 - x_4}{x_k} \right| \geq 4, \text{ notamment} \quad \geq 6 \ (k = 3,4).$$

7. Tube laser à gaz suivant l'une des revendication 1 à 6, caractérisé en ce que pour l'élément de transition (16, 17), le rapport du diamètre intérieur à la longueur totale est compris entre 0,5 : 1 et 1,5 : 1, le rapport des longueurs des deux anneaux métalliques (28, 29; 30, 31) est compris entre 0,7 : 1 et 1,3 : 1 et le rapport de l'épaisseur de paroi à la longueur totale est compris entre 0,06 : 1 et 0,15 : 1.

8. Tube laser à gaz suivant l'une des revendications 1 à 7, caractérisé en ce que le tronçon d'enceinte et l'embout sont constitués en des types de verre différents avec notamment:
$35 \times 10^{-7\circ}K^{-1} \leq x_1 \leq 55 \times 10^{-7\circ}K^{-1}$ et $80 \times 10^{-7\circ}K^{-1} \leq x_2 \leq 100 \times 10^{-7\circ}K^{-1}$.

9. Tube de laser à gaz suivant la revendication 8, caractérisé en ce que $x_1$ et $x_2$ ont des valeurs d'environ $50 \times 10^{-7\circ}K^{+1}$ et $95 \times 10^{-7\circ}K^{-1}$ et le premier et le second anneaux métalliques (28, 29; 30, 31) sont en $Ni_{28}Co_{18}F_{54}$ et en $Ni_{51}Cr_1Fe_{48}$.

10. Tube de laser à gaz suivant l'une des revendications 1 à 9, caractérisé en ce que l'élément de transition (16, 17) sert d'électrode, et de préférence sert d'anode.

# FIG 1

# FIG 2